# EUROPÄISCHE PATENTANMELDUNG

(11) **EP 0 627 171 A1**
(43) Veröffentlichungstag der Anmeldung: **07.12.1994**
(21) Anmeldenummer: 94107124.3
(22) Anmeldetag: 06.05.1994
(51) Int. Cl.: A23G 3/02, A23G 3/20, A23G 1/20

(54) **Verfahren und Vorrichtung zum Giessen von Schokoladenmasse in eine Form**

(30) Priorität: 06.05.1993 IT MI930911
(71) Anmelder: CARLE & MONTANARI S.p.A., I-20141 Milano (IT)
(72) Erfinder: Cerboni, Renzo, I-20146 Milano (IT)
(74) Vertreter: Mayer, Hans Benno, Dipl.-Ing.

(57) **Zusammenfassung**

Verfahren und Vorrichtung zum Vergiessen von Schokoladenmasse in Formen, wobei das Einbringen der Schokoladenmasse in quantitativ differenzierter Weise laengs der Achse der herzustellenden Schokoladentafel erfolgt, und zu diesem Zweck das Antriebsmittel der Foerderpumpe fuer die Schokoladenmasse sowie das Antriebsmittel zum Verfahren der Giessvorrichtung gegenueber der Form von steuerbaren Motoren gebildet wird, die mit einer NC-Steuereinrichtung wirkverbunden sind.

## Beschreibung

Die vorstehende Erfindung betrifft ein Verfahren und eine Vorrichtung zum Vergiessen von Schokoladenmasse in Formen. Es ist vom Stand der Technik her bekannt, Schokoladenmasse in Formen einzugiessen, um Schokoladetafeln herzustellen, die verschiedene Abmessungen aufweisen koennen. Bei diesem Verfahren wird die Schokoladenmasse ueber eine sogenannte "Giesszunge" in die Form eingebracht.

Dafuer findet eine Giessvorrichtung Verwendung, die gegenueber der Form verfahrbar angeordnet ist; waehrend dieser Verschiebebewegung wird das pastoese Erzeugnis in Form einer "Giesszunge" in die Hohlraeume der Giessform eingebracht.

Mit diesem Giessverfahren ist es moeglich, in die Hohlraeume der Giessform eine Materialmischung einzubringen, die aus Schokolade und festen Zusatzstoffen, z. B. Nuessen oder Mandeln besteht, die der vorgemischten Schokoladenmasse untergemengt wurden.

Das Giessverfahren unter Verwendung einer "Giesszunge" weist erhebliche Vorteile technischer Natur auf. Bei der Herstellung von Schokoladentafeln mit grosser Oberflaeche treten jedoch Schwierigkeit hinsichtlich der gewuenschten Gleichmaessigkeit der Dicke der Tafel auf, denn beim Einbringen der Schokoladenmasse in Form einer "Giesszunge" ist es nicht moeglich, die Schokoladenmasse in unmittelbarer Naehe der Umfangsraender des Giesshohlraumes einzubringen, dies um zu vermeiden, dass die Giessformen durch das Produkt verschmutzt werden.

Daraus folgt, dass waehrend der mechanischen Behandlung der Giessform keine Gewaehr dafuer gegeben ist, dass das in den Hohlraum eingegossene Erzeugnis auch gleichmaessig und praezise in alle vier Ecken des die Form der Tafel bestimmenden Hohlraumes vordringt.

Haeufig kommt es auch vor, dass konvex geformte oder konisch ausgebildete Schokoladetafeln erzeugt werden, oder es werden Schokoladetafeln hergestellt, deren Ecken nicht vollstaendig ausgeformt sind.

Diese Maengel stellen einen Produktionsfehler dar, der sich negativ auf das aeussere Erscheinungsbild der Schokoladentafel auswirkt. Auch tritt der Nachteil auf, dass die Tafeln, die keine gleichmaessige Dicke aufweisen, zu Funktionsstoerungen in der nachgeschalteten Verpackungsmaschine fuehren.

Es ist daher Aufgabe der vorstehenden Erfindung, ein Verfahren sowie eine Vorrichtung vorzuschlagen, mit denen die Nachteile des Standes Technik vermieden werden und die Moeglichkeit geschaffen wird, eine Schokoladentafel herzustellen, die sich durch gleichmaessige Dicke und einwandfrei ausgeformte Ecken auszeichnet.

Diese Aufgabe wird mit einem Verfahren geloest, das sich dadurch kennzeichnet, dass die Schokoladenmasse mit differenzierter Menge laengs der Achse der Giessform eingebracht wird.

Mit besonderem Vorteil wird am Anfang sowie am Ende des Formhohlraumes der Giessform eine groessere Menge an Schokoladenmasse eingebracht, wogegen in der Mitte des Formhohlraumes ein geringeres Einbringen von Schokoladenmasse erfolgt.

Es hat sich als Vorteil erwiesen, in gesteuerter Weise die Foerderleistung der Pumpe zum Zufuehren der Schokoladenmasse zu varieren.

Ferner hat es sich als vorteilhaft erwiesen, die Vorschubgeschwindigkeit der Giessvorrichtung gesteuert gegenueber der zu fuellenden Form zu varieren.

Die Vorrichtung zur Durchfuehrung des erfindungsgemaessen Verfahrens zeichnet sich dadurch aus, dass das Antriebsmittel der Pumpe fuer die Zufuehrung der Schokoladenmasse, sowie das Antriebsmittel fuer die Verschiebung der Giessvorrichtung von steuerbaren Motoren gebildet werden, die mit einer NC-Steuereinrichtung wirkverbunden sind.

Aufgrund der Moeglichkeit, das Schokoladenprodukt quantitativ in differenzierter Weise in die Giessform einzubringen, wird es moeglich, z. B. am Beginn des Giesshohlraumes, eine groessere Produktmenge einzubringen, im Anschluss daran erfolgt eine geringere Einbringung, und gegen Ende des Giesshohlraumes der Form erfolgt erneut eine quantitativ groessere Einbringung von Schokoladenmasse.

Da auch die Vorschubgeschwindigkeit der Giessvorrichtung gegenueber der nicht bewegten Giessform steuerbar ist, wird es ermoeglicht, das oertliche Ablegen der von der Schokoladenmasse gebildeten "Giesszunge" in Laengsrichtung des Giesshohlraumes der Form zu steuern.

Der Erfindungsgegenstand wird nun genauer beschrieben und in den Zeichnungen dargestellt. Es zeigen:
Fig. 1 schematisch eine Giessform unter der Materialeinspeisevorrichtung einer Giessanlage,
Fig. 2 eine Draufsicht auf die Giessanlage,
Fig. 3 schematisch in Draufsicht einen Hohlraum einer Giessform,
Fig. 4 die Giessform im Schnitt entlang der Linie IV-IV der Fig. 3 und
Fig. 5 ein Diagramm zur Darstellung der unterschiedlichen quantitativen Einbringung von Schokoladenmasse waehrend des Giessvorganges zum Fuellen eines Formhohlraumes.

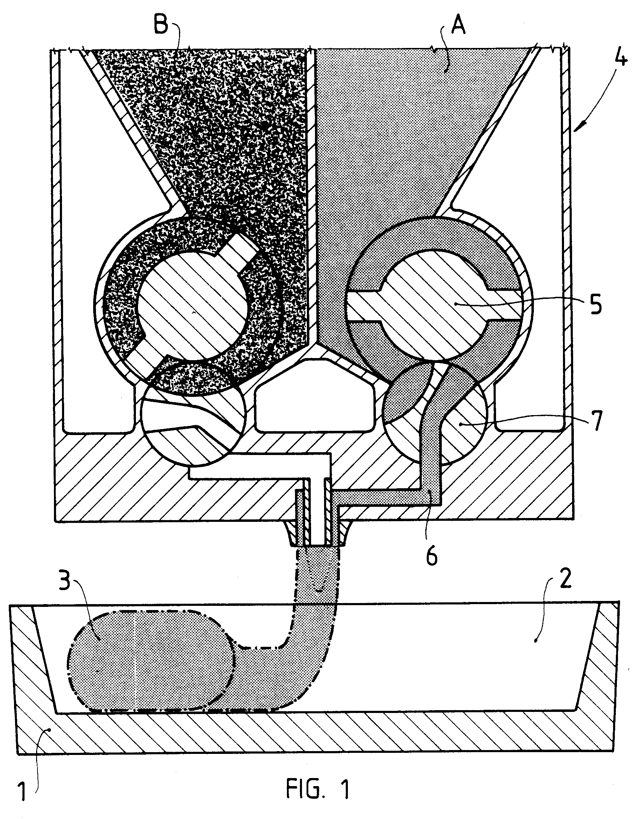

Wie der Fig. 1 zu entnehmen ist, weist die Giessform 1 einen Hohlraum auf, der mit Schokoladenmasse 3 zu fuellen ist. Die Giessfrom ist unter einer Giessvorrichtung 4 angeordnet, die verschiebbar gelagert ist und Bestandteil einer bekannten Giessanlage darstellt.

Im dargestellten Beispiel kann der Hohlraum 2 mit einem Produkt (A) sowie mit einem Produkt (B) gefuellt werden, in der folgenden Beschreibung wird aus Gruenden der Einfachheit nur das Fuellen der Giessform mit dem Produkt (A) beschrieben.

Um in dosierter Weise das Produkt (A) in den Formhohlraum 2 der Giessform 1 einbringen zu koennen, ist im unteren Teil der Vorrichtung 4 ein Fluegelrad 5 angeordnet, das waehrend seiner Drehbewegung das Produkt (A) in den Hohlraum 2 der Giessform 1 foerdert.

Die Einspeiseleitung 6 kann unter Zuhilfenahme eines Absperrventiles 7, das aus dem Stand der Technik bekannt ist, abgesperrt werden.

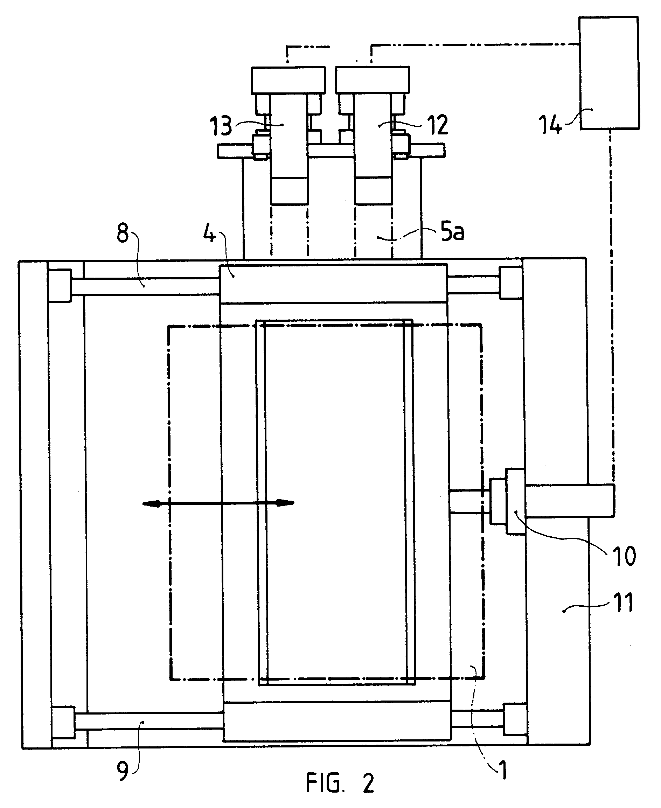

Wie der Fig. 2 zu entnehmen ist, ist die Vorrichtung 4 zum Vergiessen des Produktes ueber einer Giessform 1 angeordnet. Die Giessform ist waehrend des Giessvorganges ortsfest angeordnet. In bekannter Weise ist die Giessvorrichtung 4 verschiebbar auf parallelen Fuehrungen 8 und 9 gelagert, die ueber der die Giessform 1 aufnehmenden Ebene vorgesehen ist.

Zum Bewegen der Giessvorrichtung ist diese mit einem Antriebsmotor 10 wirkverbunden, und der Antriebsmotor ist am Rahmen 11, der die Parallelfuehrungen 8 und 9 aufnimmt, befestigt.

Der Motor 10 ist in vorteilhafter Weise als steuerbarer Motor ausgebildet (z. B. in Form eines steuerbaren Gleichstrommotors). Somit eroeffnet sich die Moeglichkeit, die Giessvorrichtung 4 gesteuert und mit vorbestimmter Geschwindigkeit gegenueber der Giessform 1 zu verfahren. Die Welle 5a des Fluegelrades 5, das fuer die Zufuehrung des Produktes (A) in den Giesshohlraum 2 der Giessform 1 Sorge traegt, ist ebenfalls mit einem steuerbaren Motor 12, in vorteilhafter Weise einem steuerbaren Gleichstrommotor, verbunden.

Sowohl der steuerbare Motor 10 als auch der steuerbare Motor 12 sind mit einer NC-Steuereinrichtung 14 wirkverbunden.

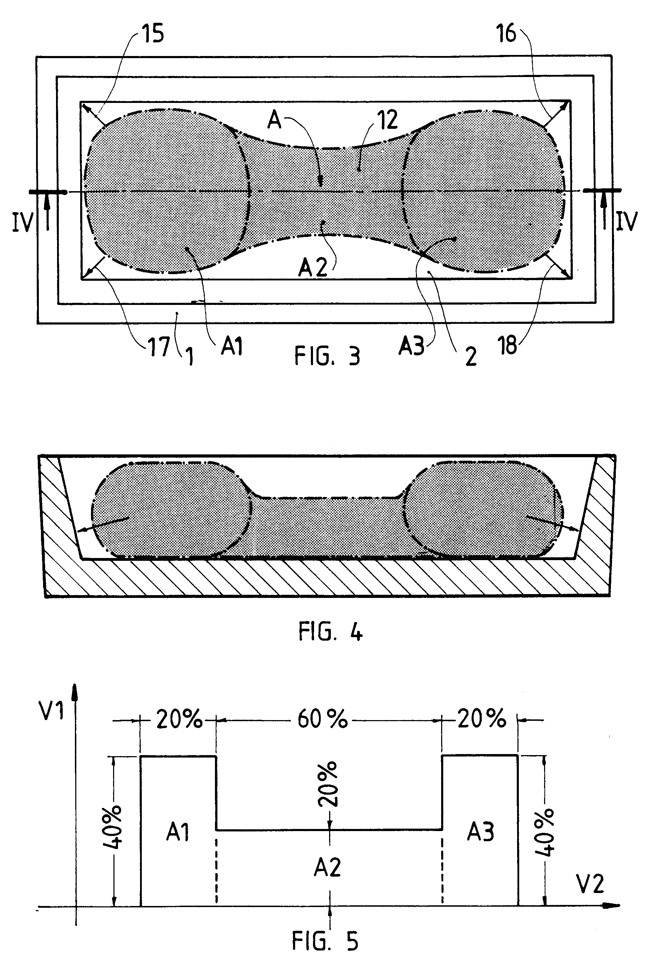

Dank der Moeglichkeit, gesteuert auf die Antriebsgeschwindigkeit sowie die Betaetigung der Motoren 10 und 12 einzuwirken, wird es moeglich, die Masse (A) mit gesteuerter, differenzierter Menge in den Hohlraum 2 der Giessform 1 einzubringen, wie dies schematisch in den Figuren 3 und 4 dargestellt ist.

Hierzu ist es lediglich erforderlich, die Motoren 12 und 10 gesteuert und mit unterschiedlicher Geschwindigkeit anzutreiben.

Wie den Figuren 3 und 4 zu entnehmen ist, wird es ermoeglicht, eine groessere Produktmenge (A1) am Anfang des Hohlraumes 2 in die Form 1 einzubringen, im Anschluss daran wird eine geringere Produktmenge (A2) in den Formhohlraum eingefuellt, und anschliessend wird in der Naehe des verbleibenden Endes des Hohlraumes 2 erneut eine groessere Produktmasse (A3) in den Formhohlraum 2 abgelegt.

Das Einbringen einer groesseren Menge an Schokoladenmasse (A1) und (A3) in der Naehe des Hohlraumanfangs und des Hohlraumendes (Ecken) der Ausnehmung 2 ermoeglicht es, einen groesseren statischen Druck aufgrund der Materialanhaeufungen (A1) und (A3) aufzubauen, was ein einwandfreies Fuellen der Ecken 15, 16, 17 und 18 des Hohlraumes 2 gewaehrleistet, wie dies schematisch durch die Pfeile in Fig. 3 angedeutet ist.

In Fig. 5 ist mittels eines Diagrammes die Mengenverteilung des Produktes A1, A2 und A3 entlang der Laengsachse der Giessform in Abhaengigkeit von der Antriebsgeschwindigkeit der Motoren 10 und 12 dargestellt.

Durch Aendern der Geschwindigkeit des Motors 12, der die Versorgungspumpe fuer die Zuleitung des Produktes antreibt, wird es moeglich, die zugefuehrte Menge des Schokoladenproduktes in den Zonen A1, A2 und A3 zu veraendern.

Durch Veraendern der Drehgeschwindigkeit des Antriebsmotores 10, der fuer die Verschiebebewegung der Giessvorrichtung 4 zustaendig ist, wird es moeglich sein, die Breite der Materialanhaeufungen A1, A2 und A3 entlang der Achse des Giesshohlraumes 2 der Giessform 1 zu veraendern.

Wichtig ist es, dass die gesamthaft zugefuehrte Menge fuer jeden Hohlraum 2 einem Gewicht von 100 % entspricht, das heisst dem festgelegten Gewicht fuer die fertige Schokoladentafel.

## Patentansprüche

1. Verfahren zum Vergiessen von Schokoladenmasse in die Hohlraeume (2) einer Giessform (1), **dadurch gekennzeichnet**, dass ein quantitativ differenziertes Einbringen der Masse (A1, A2, A3) der Schokolade entlang der Achse der Giessform (1) erfolgt.

2. Verfahren, nach Patentanspruch 1, **dadurch gekennzeichnet**, dass eine mengenmaessig groessere Masse (A1) am Anfang sowie (A3) am Ende des Hohlraumes (2) der Giessform (1) eingebracht wird, wogegen in der Mitte des Giesshohlraumes (2) eine geringere Menge an Schokoladenmasse (A2) eingebracht wird.

3. Verfahren, nach Patentanspruch 1, **dadurch gekennzeichnet**, dass die Antriebsgeschwindigkeit der Einspeisevorrichtung (12) der Schokoladenmasse in gesteuerter Weise variiert wird.

4. Verfahren, nach Patentanspruch 1, **dadurch gekennzeichnet**, dass die Vorschubgeschwindigkeit der Giesseinrichtung (4) gegenueber der Giessform (1) in gesteuerter Weise variiert wird.

5. Vorrichtung, zum Vergiessen von Schokoladenmasse in die Hohlraeume einer Giessform (1, 2), die waehrend des Giessvorganges ortsfest angeordnet ist, unter Verwendung einer Giessvorrichtung (4), die verfahrbar gegenueber der Giessform (1, 2) gelagert ist, nach Patentanspruch 1 bis 4, **dadurch gekennzeichnet**, dass die Antriebseinrichtung (12) der Einspeisepumpe (5) fuer das Einbringen der Schokoladenmasse (3) sowie die Antriebseinrichtung (10) zum Verschieben der Giessvorrichtung (4) von steuerbaren Motoren gebildet sind, die mit einer NC-Einrichtung (14) wirkverbunden sind.
